**Europäisches Patentamt**

**European Patent Office**

**Office européen des brevets**

(11) Veröffentlichungsnummer: **0 136 971**
**B1**

# EUROPÄISCHE PATENTSCHRIFT

(45) Veröffentlichungstag der Patentschrift:
09.03.88

(51) Int. Cl.⁴: **D 03 D 51/00,** F 16 D 49/12

(21) Anmeldenummer: **84810352.9**

(22) Anmeldetag: **17.07.84**

(54) **Bremsvorrichtung für eine Webmaschine.**

(30) Priorität: **06.10.83 CH 5440/83**

(43) Veröffentlichungstag der Anmeldung:
**10.04.85 Patentblatt 85/15**

(45) Bekanntmachung des Hinweises auf die Patenterteilung:
**09.03.88 Patentblatt 88/10**

(84) Benannte Vertragsstaaten:
**DE FR IT**

(56) Entgegenhaltungen:
**DE - A - 2 137 433**
**DE - B - 1 022 855**
**US - A - 2 974 688**

(73) Patentinhaber: **GEBRÜDER SULZER AKTIENGESELLSCHAFT, Zürcherstrasse 9, CH-8401 Winterthur (CH)**

(72) Erfinder: **Greger, Wolfgang, Chännerwiesstr. 2, CH-8352 Rümikon (CH)**

ACTORUM AG

**Beschreibung**

Die Erfindung betrifft eine Bremsvorrichtung für eine Webmaschine, mit einem an eine Umlauftrommel anpressbaren Bremsband, das an wenigstens einem Bremshebel angreift, wobei wenigstens ein Ende des Bremsbandes über einen druckbeaufschlagten elastischen Körper am Bremshebel befestigt ist.

Derartige Bremsvorrichtungen sind an sich bekannt (z.B. DE-A 2 137 433). Dabei soll durch den elastischen Körper eine gewisse Pufferwirkung am Bremsbandende gewährleistet sein, damit dessen Beanspruchung verringert wird. Es hat sich jedoch gezeigt, dass bei den herkömmlichen elastischen Körpern die Pufferwirkung unbefriedigend ist. Dies ist insbesondere der Fall bei sehr schnellen Bremsvorgängen, wie sie bei Fehlfunktionen an schnelllaufenden Hochleistungswebmaschinen erforderlich sind. Bei einer solchen Fehlfunktion, z.B. einem Schussfehler, ist es erforderlich, dass die Hauptwelle innerhalb weniger Winkelgrade zum Stillstand kommt. Dies hat eine sehr starke Beanspruchung der Bremsbänder und Antriebselemente zur Folge. Bei den herkömmlichen elastischen Büchsen ist offensichtlich die Trägheit zu gross für derartig schnelle Kraftverläufe, da die volle Büchse als starrer Körper wirkt. Die Folge ist, dass die Bremsbänder öfters reissen und ersetzt werden müssen. Darüber hinaus werden die abzubremsenden Antriebselemente unerwünschten Torsionsschwingungen ausgesetzt.

Aufgabe der Erfindung ist es, die eingangs genannte Bremsvorrichtung so zu verbessern, dass auch bei extrem kurzen Bremszeiten eine genügende Pufferwirkung erzielt und somit ein sicherer Betrieb mit langer Lebensdauer der Bremsbänder und Antriebselemente gewährleistet ist.

Zur Lösung dieser Aufgabe dient die Massnahme, dass der elastische Körper mindestens an seinem druckbeaufschlagten Teil Ausnehmungen aufweist.

Hierdurch lässt sich eine überraschende Verbesserung der Reaktionsfähigkeit des elastischen Körpers erreichen, so dass auch bei sehr kurzen Bremszeiten eine ausreichende Dämpfung und hervorragende Betriebssicherheit gewährleistet ist. Dabei können auch verhältnismässig harte Elastomere zur Anwendung gelangen, wodurch eine lange Lebensdauer der elastischen Körper erreicht wird.

Nach einer besonders vorteilhaften Ausführung der Erfindung kann der elastische Körper in einer Hülse angeordnet sein, an der das Bremsband angreift. Hierbei ist eine besonders sichere Befestigung des Bremsbandes bei elastischen Körpern verschiedener Form gewährleistet.

Der elastische Körper kann als Büchse ausgeführt sein. Hierbei kann das Ende des Bremsbandes die elastische Büchse direkt umgreifen.

Die elastische Büchse kann an einem mit dem Bremshebel verbundenen Bolzen exzentrisch angeordnet sein. Hierbei lässt sich eine besonders wirkungsvolle Materialnutzung der Büchse erzielen.

Die Ausnehmungen können sich dabei im dickeren Teil der elastischen Büchse befinden. Hierbei wird eine optimael Pufferwirkung erzielt.

Weiter kann der elastische Körper klotzartig ausgebildet sein. Dies hat den Vorteil, dass die elastischen Körper bei Bedarf verhältnismässig leicht ausgewechselt werden können.

Die Ausnehmungen können sich quer zur Längsrichtung des Bremsbandes erstrecken. Dies hat den Vorteil einer verhältnismässig einfachen Fertigung der Ausnehmungen.

Die Ausnehmungen können rillenartig ausgebildet sein. Dies ergibt den Vorteil einer besonders günstigen Feder- bzw. Dämpfungscharakteristik.

Die nähere Erläuterung der Erfindung erfolgt anhand von Ausführungsbeispielen in Verbindung mit nachstehender Zeichnung. Es zeigen:

Fig. 1 eine perspektivische Ansicht einer erfindungsgemässen Bremsvorrichtung,
Fig. 2 einen vergrösserten Teilschnitt gemäss der Schnittebene II-II nach Fig. 1 und
Fig. 3 eine Variante des elastischen Körpers nach Fig. 2.

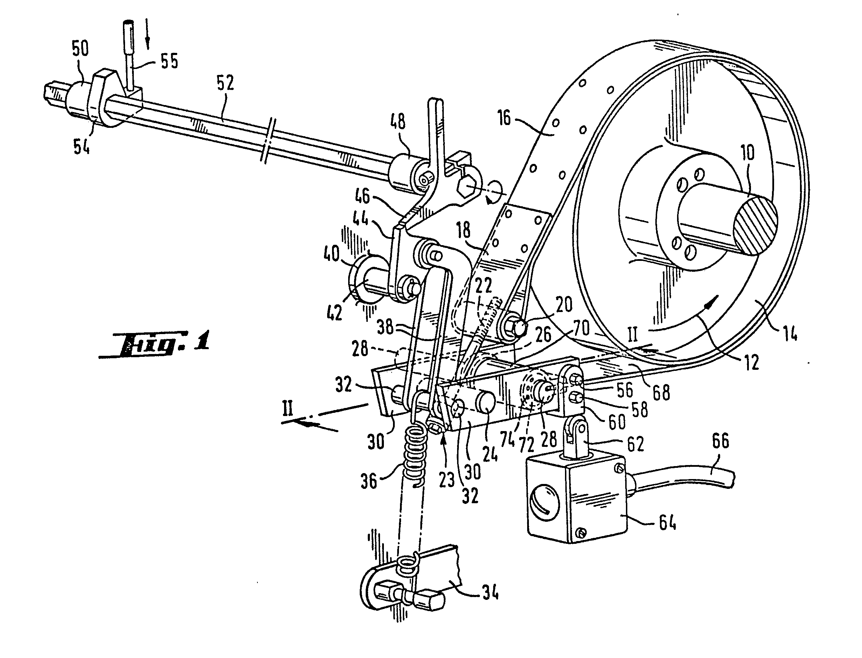

An einer Hauptwelle 10 (Fig. 1) ist eine sich in Richtung des Pfeils 12 drehende Bremstrommel 14 mit einem Bremsband 16 befestigt. Die eine Endschleife 18 des Bremsbandes 16 ist über einen Bolzen 20, einen Lenker 22 mit einer elastischen Büchse 23 und einen Zapfen 24 mit einem an der von einer Konsole 26 gehaltenen Achse 28 schwenkbar gelagerten doppelwandigen Bremshebel 30 verbunden. Der Bremshebel 30 weist einen Zapfen 32 auf, welcher einerseits zur Befestigung einer an einer Federkonsole 34 angelenkten Zugfeder 36 dient und andererseits als Angriffspunkt für einen doppelwandigen Lenker 38 dient, welcher mit einem an einer von einer Konsole 40 gehaltenen Achse 42 befestigten Exzentersperrhebel 44 verbunden ist. Der Exzentersperrhebel 44 steht im Eingriff mit einer Sperrklinke 46, welche mit einer in Lagerbüchsen 48, 50 gelagerten Wächterwelle 52 drehfest verbunden ist. Mit der Wächterwelle 52 ist weiter ein Hebel 54 drehfest verbunden, welcher über eine Wächterstange 55 beaufschlagbar ist. An einer Wand des Bremshebels 30 sitzt ein mittels Bolzen 56, 58 befestigter Schuh 60, welcher mit dem Rollenhebel 62 eines Endschalters 64 in Kontakt steht. Dieser ist über eine Leitung 66 mit dem nicht dargestellten Hauptantriebsmotor verbunden.

Das andere Ende 68 des Bremsbandes 16 ist über eine in einer Hülse 70 angeordnete elastische Büchse 72 mit der Achse 28 verbunden.

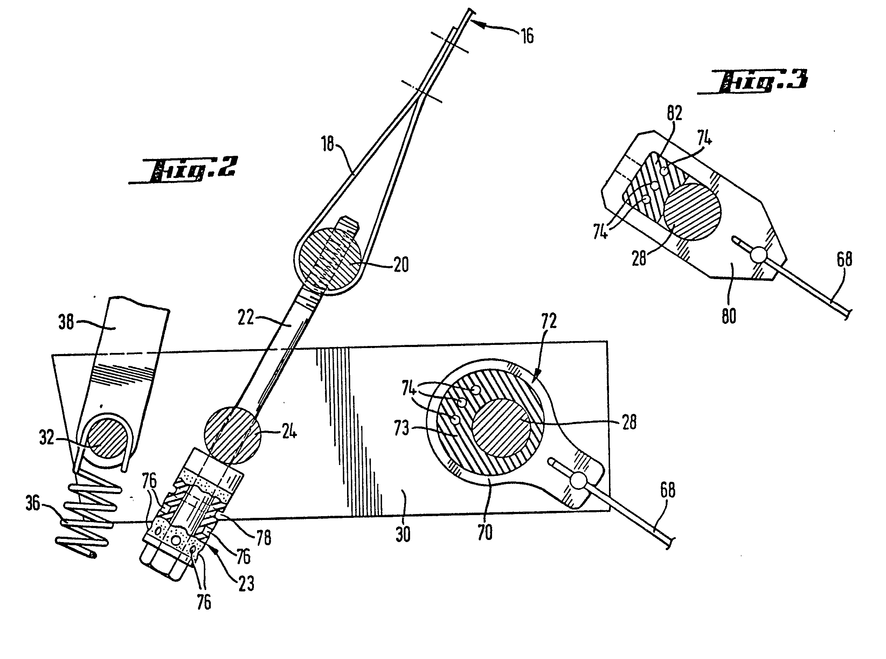

Wie aus Fig. 2 hervorgeht, weist die exzentrisch ausgeführte elastische Büchse 72 an ihrem druckbeaufschlagten Teil 73 Ausnehmungen in Form von achsparallelen Löchern 74 auf, während die elastische Büchse 23 Ausnehmungen in Form von radialen Bohrungen 76 sowie Umfangsrillen 78 aufweist.

Beim Betrieb der oben beschriebenen Vorrichtung bewegt sich die Wächterstange 55 in der Pfeilrichtung, wobei der Hebel 54 eine Drehung der Wächterwelle 52 in der in der Figur dargestellten Pfeilrichtung bewirkt. Dabei wird die Sperrklinke 46 in der Figur 1 nach oben verdreht, so dass sich der Exzentersperrhebel 44 unter Einwirkung der Zugfeder 36 bzw. des Lenkers 38 in Uhrzeigerrichtung verdrehen kann. Hierbei wird der Hebel 30 gegen den Uhrzeigersinn verschwenkt, wobei der Lenker 22 mit der Endschleife 18 des Bremsbandes 16 durch den Hebel 30 mit dem Bolzen 24 angezogen wird. Hierbei kann die Feder 36 so ausgelegt sein, dass eine schnelle Bremsung mit relativ kurzem Bremsweg erzielt wird, da durch die Ausnehmungen 74, 76, 78 eine hervorragende Dämpfungswirkung erzielt wird. Insbesondere werden auch Torsionsschwingungen der Hauptwelle bzw. allfälliger Nebenwellen weitgehend eliminiert.

Beim Ausführungsbeispiel gemäss Fig. 3 ist das Bremsbandende 68 an einer Hülse 80 befestigt, in welcher statt der elastischen Büchse 72 ein klotzartiger elastischer Körper 82 angeordnet ist. Bei diesem ist eine verhältnismässig einfache Auswechselbarkeit gegeben.

Es versteht sich, dass die Ausnehmungen auch als geschlossene Hohlräume bzw. Poren ausgebildet sein können. Weiter können die Ausnehmungen mit Material anderer Dichte gefüllt sein.

## Patentansprüche

1. Bremsvorrichtung für eine Webmaschine, mit einem an eine Umlauftrommel anpressbaren Bremsband (16), das an wenigstens einem Bremshebel (30) angreift, wobei wenigstens ein Ende (18, 68) des Bremsbandes über einen druckbeaufschlagten elastischen Körper (23, 72, 82) am Bremshebel (30) befestigt ist, dadurch gekennzeichnet, dass der elastische Körper (23, 72, 82) mindestens an seinem druckbeaufschlagten Teil (73) Ausnehmungen (74, 76, 78) aufweist.

2. Bremsvorrichtung nach Anspruch 1, dadurch gekennzeichnet, dass der elastische Körper (72, 82) in einer Hülse (70, 80) angeordnet ist, an der das Bremsband (16) angreift.

3. Bremsvorrichtung nach Anspruch 1, dadurch gekennzeichnet, dass der elastische Körper als Büchse (23, 72) ausgeführt ist.

4. Bremsvorrichtung nach Anspruch 3, dadurch gekennzeichnet, dass die Büchse (72) an einem mit dem Bremshebel (30) verbundenen Bolzen (28) exzentrisch angeordnet ist.

5. Bremsvorrichtung nach Anspruch 4, dadurch gekennzeichnet, dass sich die Ausnehmungen (74) im dickeren Teil der Büchse befinden.

6. Bremsvorrichtung nach Anspruch 1, dadurch gekennzeichnet, dass der elastische Körper (82) klotzartig ausgebildet ist.

7. Bremsvorrichtung nach Anspruch 1, dadurch gekennzeichnet, dass sich die Ausnehmungen (74, 76, 78) quer zur Längsrichtung des Bremsbandes (16) erstrecken.

8. Bremsvorrichtung nach Anspruch 1, dadurch gekennzeichnet, dass die Ausnehmungen (78) rillenartig ausgebildet sind.

## Claims

1. A brake which is of use for a weaving machine and which has a brake band (16) pressable on to a rotating drum and engaging at least one brake lever (30), at least one end (18, 68) of the brake band being secured by way of a pressurised resilient member (23, 72, 82) to the brake lever (30), characterised in that the resilient member (23, 72, 82) is formed with recesses (74, 76, 78) at least in its pressurised part (73).

2. A brake according to claim 1, characterised in that the resilient member (72, 82) is disposed in a sleeve (70, 80) with which the brake band (16) engages.

3. A brake according to claim 1, characterised in that the resilient member is a sleeve (23, 72).

4. A brake according to claim 3, characterised in that the sleeve (72) is disposed eccentrically on a pin (28) connected to the brake lever (30).

5. A brake according to claim 4, characterised in that the recesses (74) are disposed in the relatively thick part of the sleeve.

6. A brake according to claim 1, characterised in that the resilient member (82) is block-like.

7. A brake according to claim 1, characterised in that the recesses (74, 76, 78) extend transversely of brake band length.

8. A brake according to claim 1, characterised in that the recesses (78) are groove-like.

## Revendications

1. Dispositif de freinage pour un métier à tisser, comportant un ruban de frein (16) pouvant être serré sur un tambour en rotation, qui agit sur au moins un levier de frein (30) et dont une extrémité (18, 68) au moins est fixée sur le levier de frein (30) au moyen d'un corps élastique soumis à une pression (23, 72, 82), caractérisé en ce que le corps élastique (23, 72, 82) présente des évidements (74, 76, 78), au moins dans sa partie soumise à la pression (73).

2. Dispositif de freinage selon la revendication 1, caractérisé en ce que le corps élastique (72, 82) est disposé dans une douille (70, 80) avec laquelle le ruban de freinage (16) est en prise.

3. Dispositif de freinage selon la revendication 1, caractérisé en ce que le corps élastique est réalisé en forme de manchon (23, 72).

4. Dispositif de freinage selon la revendication 3, caractérisé en ce que le manchon (72) est disposé excentriquement sur un boulon (28) relié au levier de frein (30).

5. Dispositif de freinage selon la revendication 4, caractérisé en ce que les évidements (74) se trouvent dans la partie la plus épaisse du manchon.

6. Dispositif de freinage selon la revendication 1, caractérisé en ce que le corps élastique (82) est réalisé en forme de bloc.

7. Dispositif de freinage selon la revendication 1, caractérisé en ce que les évidements (74, 76, 78) s'étendent transversalement par rapport à la direction longitudinale du ruban de frein (16).

8. Dispositif de freinage selon la revendication 1, caractérisé en ce que les évidements (78) sont réalisés en forme de gorges.

Fig. 1

Fig.2

Fig.3

0 136 971